# EUROPÄISCHE PATENTSCHRIFT

(11) **EP 4 330 091 B1**
(45) Veröffentlichungstag und Bekanntmachung des Hinweises auf die Patenterteilung: **18.12.2024**
(21) Anmeldenummer: 22722469.8
(22) Anmeldetag: 12.04.2022
(51) Int. Cl.: B60T 7/04, B60T 8/36

(54) **HYDRAULIKBLOCK FÜR EIN BETRIEBSBREMSAGGREGAT EINER HYDRAULISCHEN FREMDKRAFTBREMSANLAGE**
HYDRAULIC BLOCK FOR BRAKE ASSEMBLY OF A HYDRAULIC INDEPENDENT POWER BRAKE SYSTEM
BLOQUE HYDRAULIQUE POUR UN GROUPE DE FREIN D'UN SYSTÈME DE FREINAGE À PUISSANCE INDÉPENDANTE

(30) Priorität: 28.04.2021 DE 102021204253
(43) Veröffentlichungstag der Anmeldung: 06.03.2024
(73) Patentinhaber: Robert Bosch GmbH, 70442 Stuttgart (DE)
(72) Erfinder: KASERER, Stefan, 87527 Ofterschwang (DE); WEH, Andreas, 87477 Sulzberg (DE)
(86) Internationale Anmeldenummer: PCT/EP2022/059727
(87) Internationale Veröffentlichungsnummer: WO 2022/228887

(56) Entgegenhaltungen:
- EP-A1- 2 883 766
- DE-A1- 102012 213 216
- DE-A1- 102014 213 732
- DE-A1- 102016 202 113
- DE-A1- 102019 203 308
- KR-A- 20190 090 637
- US-A1- 2012 177 516
- US-A1- 2020 047 731
- US-A1- 2020 282 968
- US-A1- 2020 339 092

## Beschreibung

Die Erfindung betrifft einen Hydraulikblock für ein Betriebsbremsaggregat einer hydraulischen Fremdkraftbremsanlage für einen autonom fahrenden Kraftwagen mit den Merkmalen des Oberbegriffs des Anspruchs 1.

### Stand der Technik

Zu einem autonomen Fahren bis zum Level 4 (Fahrer kann zum Eingreifen aufgefordert werden) und Level 5 (höchstes Level; kein Fahrer erforderlich) ist eine Fremdkraftbremsanlage mit Redundanzen notwendig, die einen vollständigen Ausfall der Fahrzeugbremsanlage mit an Sicherheit grenzender Wahrscheinlichkeit ausschließt, ohne dass es eines Fahrereingriffs bedarf.

Die internationale Patentanmeldung WO 2012/143 312 A1 offenbart eine elektrohydraulische Fremdkraftbremsanlage für einen Krafwagen mit einem Betriebsbremsaggregat und mit einem Bremsdruckregelaggregat. Das Betriebsbremsaggregat weist einen muskelkraftbetätigbaren Hauptbremszylinder und eine Kolben-Zylinder-Einheit, deren Kolben mit einem Elektromotor über einen Gewindetrieb in einem Zylinder verschiebbar ist, als Fremdkraft-Bremsdruckerzeuger auf, der dem Hauptbremszylinder hydraulisch parallel geschaltet ist. Das Bremsdruckregelaggregat weist Magnetventile und in jedem Bremskreis eine Hydropumpe zu einer radindividuellen Radbremsdruckregelung auf. Das Bremsdruckregelaggregat ist an das Betriebsbremsaggregat und hydraulische Radbremsen sind an das Bremsdruckregelaggregat angeschlossen.

Die Offenlegungsschrift DE 10 2016 202 113 A1 offenbart einen schmalen, quaderförmigen Hydraulikblock für ein Hydraulikaggregat einer schlupfgeregelten, hydraulischen Fremdkraftbremsanlage mit drei Anschlüssen für einen Bremsflüssigkeitsvorratsbehälter in einer Oberseite des Hydraulikblocks. Unterhalb der Anschlüsse durchsetzt eine Hauptbremszylinderbohrung den Hydraulikblock parallel zu der Oberseite durchgehend von einer zu einer gegenüberliegenden, an die Oberseite angrenzenden Schmalseite. Unterhalb der Hauptbremszylinderbohrung durchsetzt eine Fremdkraftzylinderbohrung den Hydraulikblock quer zu der Hauptbremszylinderbohrung von einer zu einer gegenüberliegenden großen Seite des Hydraulikblocks, die an die Oberseite und die beiden Schmalseiten des Hydraulikblocks angrenzen. Zur Erzeugung eines Bremsdrucks mit Fremdkraft ist ein Fremdkraftkolben mit einem Elektromotor über einen Kugelgewindetrieb in der Fremdkraftzylinderbohrung verschiebbar. Der Elektromotor ist koaxial zur Fremdkraftzylinderbohrung außen am Hydraulikblock angeordnet und der Kugelgewindetrieb befindet sich - ebenfalls koaxial zum Elektromotor und zur Fremdkraftzylinderbohrung - zwischen dem Elektromotor und dem Fremdkraftkolben. Der Elektromotor und der Kugelgewindetrieb bilden einen Fremdkraftantrieb und zusammen mit dem Fremdkraftkolben und der Fremdkraftzylinderbohrung einen Fremdkraft-Bremsdruckerzeuger für die hydraulische Fahrzeugbremsanlage. Anschlüsse für hydraulische Radbremsen durch Bremsleitungen sind nahe der Oberseite in Höhe der Anschlüsse für den Bremsflüssigkeitsvorratsbehälter in einer der beiden großen Seiten des Hydraulikblocks angebracht.

### Offenbarung der Erfindung

Der erfindungsgemäße Hydraulikblock mit den Merkmalen des Anspruchs 1 ist für ein Betriebsbremsaggregat einer hydraulischen, eine Bremsdruckregelung aufweisenden Fremdkraftbremsanlage vorgesehen. Bremsdruckregelung bedeutet die Erzeugung und Regelung eines Bremsdrucks in der Fahrzeugbremsanlage, in Bremskreisen der Fahrzeugbremsanlage und/oder in an den Hydraulikblock angeschlossenen hydraulischen Radbremsen der Fahrzeugbremsanlage. Die Bremsdruckregelung kann insbesondere auch eine Schlupfregelung umfassen. Schlupfregelungen sind beispielsweise Blockierschutz-, Antriebsschlupf- und/oder Fahrdynamikregelungen, für die die Abkürzungen ABS, ASR und/oder FDR gebräuchlich sind. Schlupfregelungen sind bekannt und werden hier nicht erläutert.

Der Hydraulikblock dient einer mechanischen Befestigung und hydraulischen Verschaltung hydraulischer Bauelemente der Fahrzeugbremsanlage, der Bremsdruckerzeugung und/oder der Bremsdruckregelung und/oder der Schlupfregelung. Solche hydraulischen Bauelemente sind unter anderem Magnetventile, Rückschlagventile, Hydrospeicher, Dämpferkammern und Drucksensoren. Die hydraulischen Bauelemente sind in Aufnahmen im Hydraulikblock befestigt, die meist als zylindrische Senkungen, Sacklöcher oder Durchgangslöcher, teilweise mit Durchmesserstufungen, ausgebildet sind. "Verschaltet" bedeutet, dass die Aufnahmen bzw. die in ihnen befestigten hydraulischen Bauelemente durch Leitungen im Hydraulikblock entsprechend einem hydraulischen Schaltplan der Fahrzeugbremsanlage verbunden sind. Die Leitungen sind typischerweise jedoch nicht zwingend im Hydraulikblock gebohrt.

Bestückt mit den hydraulischen Bauelementen der Fahrzeugbremsanlage bzw. ihrer Schlupfregelung bildet der Hydraulikblock das Betriebsbremsaggregat, wobei "bestückt" bedeutet, dass die hydraulischen Bauelemente in den für sie jeweils vorgesehenen Aufnahmen des Hydraulikblocks befestigt sind.

Außerdem weist der Hydraulikblock insbesondere Anschlüsse für Bremsleitungen, die zu hydraulischen Radbremsen der Fahrzeugbremsanlage führen, auf.

Für ein autonomes Fahren bis zu den Leveln 4 und 5 sieht die Erfindung einen Anschluss eines Hilfsbremsaggregats an das Betriebsbremsaggregat vor. Level 4 wird auch als hochautomatisiertes Fahren bezeichnet und bedeutet, dass die Führung eines Fahrzeugs dauerhaft von einem elektronischen System übernommen und ein Fahrer nur dann zu einem Eingriff aufgefordert wird, wenn das System die Fahraufgaben nicht mehr bewältigt. Level 5 wird auch als Vollautomatisierung bezeichnet und erfordert keinen Fahrer. Zu diesem Zweck weist der Hydraulikblock des Betriebsbremsaggregats Anschlüsse für zu dem Hilfsbremsaggregat führende und von dem Hilfsbremsaggregat kommende Bremsleitungen auf. Das Hilfsbremsaggregat weist einen Fremdkraft-Bremsdruckerzeuger zu einer Erzeugung eines hydraulischen Bremsdrucks im Falle eines Ausfalls des Fremdkraft-Bremsdruckerzeugers des Betriebsbremsaggregats auf. Die Erfindung ist auch für autonomes Fahren mit niedrigeren Leveln und für nichtautonomes Fahren verwendbar.

Die Erfindung ist insbesondere auf die Anordnung der hydraulischen Bauelemente bzw. ihrer Aufnahmen und deren hydraulische Verschaltung im Hydraulikblock gerichtet.

Der erfindungsgemäße Hydraulikblock weist eine Oberseite auf, die zu einem Aufsetzen eines Bremsflüssigkeitsvorratsbehälters vorgesehen ist. In der Oberseite weist der Hydraulikblock einen oder mehrere Anschlüsse für den Bremsflüssigkeitsvorratsbehälter auf.

Eine an die Oberseite des Hydraulikblocks angrenzende Befestigungsseite des Hydraulikblocks ist zu einer Befestigung des Hydraulikblocks beziehungsweise des Betriebsbremsaggregats, das heißt des mit den hydraulischen Bauelementen der Fahrzeugbremsanlage bestückten Hydraulikblocks, an einer Spritzwand eines Kraftwagens ausgebildet. Zu diesem Zweck weist der Hydraulikblock an der Befestigungsseite beispielsweise zwei standardisierte Innengewindelöcher auf, in die Stiftschrauben oder Stehbolzen zur Befestigung des Hydraulikblocks beziehungsweise des Betriebsbremsaggregats an der Spritzwand des Kraftwagens einschraubbar sind. Eine Hauptbremszylinderbohrung mündet an der Befestigungsseite des Hydraulikblocks, so dass ein Hauptbremszylinderkolben mit Muskelkraft über ein dem Hydraulikblock gegenüber an der Spritzwand des Kraftwagens angebrachtes Bremspedal über eine Pedalstange, die das Bremspedal gelenkig mit dem Hauptbremszylinderkolben verbindet, in der Hauptbremszylinderbohrung verschiebbar ist.

Eine Fremdkraftzylinderbohrung zur Erzeugung eines Bremsdrucks mit Fremdkraft ist quer zu der Hauptbremszylinderbohrung zwischen der Oberseite des Hydraulikblocks und der Hauptbremszylinderbohrung in dem Hydraulikblock angebracht. Die Hauptbremszylinderbohrung befindet sich also unterhalb der Fremdkraftzylinderbohrung, das heißt die Hauptbremszylinderbohrung befindet sich auf einer der Oberseite des Hydraulikblocks abgewandten Seite der Fremdkraftzylinderbohrung beziehungsweise zwischen der Fremdkraftzylinderbohrung und einer der Oberseite gegenüberliegenden Unterseite des Hydraulikblocks.

Anschlüsse für den Anschluss hydraulischer Radbremsen und des Hilfsbremsaggregats durch Bremsleitungen sind in einer Motorseite des erfindungsgemäßen Hydraulikblocks angebracht. Die Motorseite grenzt an die Oberseite und an die Befestigungsseite des Hydraulikblocks an und ist zur Befestigung eines Elektromotors zum Antrieb des Fremdkraft-Bremsdruckerzeugers vorgesehen. Dabei sind drei Anschlüsse für Radbremsen nahe einer der Befestigungsseite gegenüberliegenden Seite des Hydraulikblocks in der Motorseite angebracht. "Nahe bedeutet einen Abstand von vorzugsweise nicht mehr als einem Durchmesser der Anschlüsse.

Ein Anschluss für eine Bremsleitung zu oder von dem Hilfsbremsaggregat ist von einer Achse der Fremdkraftzylinderbohrung aus in einem Winkel von etwa 45° zu der Oberseite des Hydraulikblocks schräg nach oben oder nach unten in Richtung einer der Befestigungsseite gegenüberliegenden Seite des Hydraulikblocks in der Motorseite angebracht. Ein oder mehrere Anschlüsse für das Hilfsbremsaggregat können auch nahe an der Unterseite in der Motorseite des Hydraulikblocks angebracht sein.

Hier als "Leitungen" oder "Bohrungen" beziehungsweise als "Zylinderbohrungen" bezeichnete Durchgangs- oder Sacklöcher im Hydraulikblock können auch anders als durch Bohren hergestellt sein.

Eine Ausgestaltung der Erfindung sieht eine Aufnahme für ein Rückschlagventil, durch das eine zu dem Hilfsbremsaggregat führende Bremsleitung mit dem Bremsflüssigkeitsvorratsbehälter verbunden ist, konzentrisch in oder zu einem der Anschlüsse für den Bremsflüssigkeitsvorratsbehälter vor.

Die abhängigen Ansprüche haben Weiterbildungen und vorteilhafte Ausgestaltungen der im unabhängigen Anspruch angegebenen Erfindung zum Gegenstand.

Sämtliche in der Beschreibung und der Zeichnung offenbarten Merkmale können einzeln für sich oder in grundsätzlich beliebiger Kombination bei Ausführungsformen der Erfindung verwirklicht sein. Ausführungen der Erfindung, die nicht alle, sondern nur ein oder mehrere Merkmale eines Anspruchs oder einer Ausführungsform der Erfindung aufweisen, sind grundsätzlich möglich. Möglich sind beispielsweise auch Ausführungen der Erfindung, bei denen die Anschlüsse für das Hilfsbremsaggregat an anderer Stelle als im Kennzeichen des Anspruchs 1 angeordnet sind.

### Kurze Beschreibung der Zeichnung

Die Erfindung wird nachfolgend anhand einer in der Zeichnung dargestellten Ausführungsform näher erläutert. Es zeigen:
Figur 1 einen Hydraulikschaltplan eines Betriebsbremsaggregats einer elektrohydraulischen Fremdkraftbremsanlage gemäß der Erfindung;
Figur 2 einen Hydraulikschaltplan eines Hilfsbremsaggregats der elektrohydraulischen Fremdkraftbremsanlage aus Figur 1;
Figur 3 eine Ansicht einer Motorseite eines erfindungsgemäßen Hydraulikblocks des Betriebsbremsaggregats der Fahrzeugbremsanlage gemäß Figur 1;
Figur 4 eine Ansicht einer der Motorseite gegenüberliegenden Ventilseite des Hydraulikblocks aus Figur 3; und
Figuren 5, 5a, 6 und 7 Teile einer Verbohrung des Hydraulikblocks aus Figuren 3 und 4.

Die Zeichnungen sind teilweise vereinfachte Darstellungen.

### Ausführungsform der Erfindung

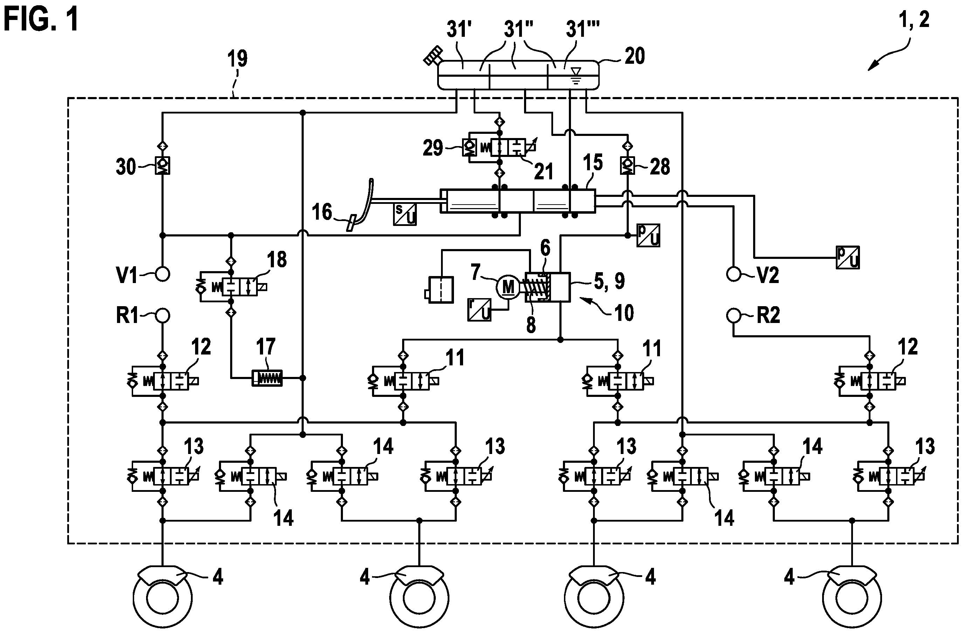

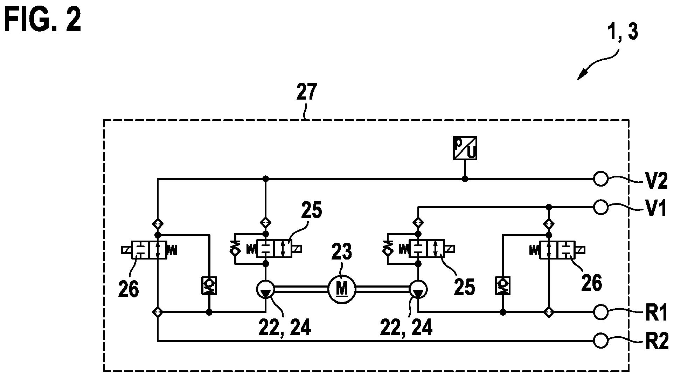

Die in Figuren 1 und 2 dargestellte, erfindungsgemäße elektrohydraulische Fremdkraftbremsanlage 1 ist für einen autonom bis zum Level 4 oder 5 fahrenden Personenkraftwagen vorgesehen. Level 4 bedeutet ein autonomes Fahren, wobei ein Fahrer zum Eingreifen aufgefordert werden kann, und Level 5, das höchste Level, ein autonomes Fahren, das keines Fahrereingriffs bedarf.

Die Fremdkraftbremsanlage 1 weist ein Betriebsbremsaggregat 2 und ein Hilfsbremsaggregat 3 auf. Das Betriebsbremsaggregat 2 ist zu einer Bremsbetätigung und das Hilfsbremsaggregat 3 zu einer Bremsbetätigung bei einem Fehler oder Ausfall des Betriebsbremsaggregats 2 vorgesehen. An das Betriebsbremsaggregat 2 sind über - im Ausführungsbeispiel vier - Bremsleitungen hydraulische Radbremsen 4 angeschlossen. Das Hilfsbremsaggregat 3 ist über Bremsleitungen so an das Betriebsbremsaggregat 2 angeschlossen, dass die Radbremsen 4 auch mit dem Hilfsbremsaggregat 3 betätigbar sind. Das Betriebsbremsaggregat 2 und das Hilfsbremsaggregat 3 ist jeweils eine eigene Baugruppe, wobei das Betriebsbremsaggregat 2 an einer Spritzwand des Personenkraftwagens befestigt wird und das Hilfsbremsaggregat 3 an einer an sich beliebigen Stelle des Personenkraftwagens angeordnet werden kann. Die Bremsleitungen, die das Hilfsbremsaggregat 3 mit dem Betriebsbremsaggregat 2 verbinden, werden nachfolgend auch als Vorlaufleitungen V1, V2 und als Rücklaufleitungen R1, R2 bezeichnet.

Die erfindungsgemäße Fahrzeugbremsanlage 1 ist als Zweikreis-Bremsanlage und ihre Bremsaggregate 2, 3 sind als Zweikreis-Bremsaggregate ausgeführt. Es sind jeweils zwei Radbremsen 4 einem Bremskreis zugeordnet. Das Hilfsbremsaggregat 3 ist in jedem Bremskreis durch eine Vorlaufleitung V1, V2 und durch eine Rücklaufleitung R1, R2 an das Betriebsbremsaggregat 2 angeschlossen. Anschlusspunkte der Vorlaufleitungen V1, V2 und der Rücklaufleitungen R1, R2 sind im Betriebsbremsaggregat 2 und im Hilfsbremsaggregat 3 übereinstimmend mit V1, V2, R1 und R2 bezeichnet.

Das Betriebsbremsaggregat 2 weist eine Kolben-Zylinder-Einheit 5 auf, deren Kolben 6 mit einem Elektromotor 7 über einen Gewindetrieb 8 als Rotations-/Translations-Wandelgetriebe in einem Zylinder 9 verschiebbar ist. Der Elektromotor 7, der Gewindetrieb 8 und die Kolben-Zylinder-Einheit 5 bilden einen Fremdkraft-Bremsdruckerzeuger 10 des Betriebsbremsaggregats 2 zur Erzeugung eines Bremsdrucks für eine Betriebsbremsung. Die Betriebsbremsung ist die übliche und vorgesehene Bremsbetätigung.

Der Fremdkraft-Bremsdruckerzeuger 10 ist über Betriebsbremsventile 11 zwischen Trennventilen 12 und Einlassventilen 13 an die beiden Bremskreise angeschlossen.

Das Betriebsbremsaggregat 2 weist für jede Radbremse 4 ein Einlassventil 13 und ein Auslassventil 14 auf, mit denen Radbremsdrücke in jeder Radbremse 4 einzeln regelbar sind. Dadurch sind die Radbremsdrücke in den Radbremsen 4 und damit Bremskräfte der Radbremsen 4 im normalen Fahrbetrieb ohne Schlupf regelbar. Außerdem sind Schlupfregelungen wie Blockierschutz- und Antriebsschlupfregelung, Fahrdynamikregelungen, die umgangssprachlich auch als Schleuderschutzregelungen bezeichnet werden, automatische Bremsungen, Abstandsregelungen und dergleichen mehr möglich. Solche Regelungen sind bekannt und werden hier nicht näher erläutert. Die Einlassventile 13 und die Auslassventile 14 können auch als Radbremsdruckregelventilanordnungen 13, 14 aufgefasst werden.

Außer dem Fremdkraft-Bremsdruckerzeuger 10 weist das Betriebsbremsaggregat 2 einen muskelkraftbetätigbaren Hauptbremszylinder 15 auf, an den die Radbremsen 4 über die Trennventile 12 und die Einlassventile 13 angeschlossen sind. Das Betriebsbremsaggregat 2 weist in jedem Bremskreis ein Trennventil 12 und für jede Radbremse 4 ein Einlassventil 13 und ein Auslassventil 14 auf. Der Hauptbremszylinder 15 dient als Sollwertgeber für die in den Radbremsen 4 einzustellenden Radbremsdrücke bei einer Betriebsbremsung im Falle eines Fahrerbetriebs. Der Bremsdruck wird sowohl im Fahrerbetrieb als auch bei einem autonomen Fahren mit dem Fremdkraft-Bremsdruckerzeuger 10 erzeugt. Der Hauptbremszylinder 15 wird bei einer Betriebsbremsung durch Schließen der Trennventile 12 hydraulisch von den Radbremsen 4 getrennt.

Wie gesagt dient der Hauptbremszylinder 15 als Sollwertgeber für die Radbremsdrücke bei einer Betriebsbremsung beim Fahrerbetrieb, bei der der Bremsdruck mit dem Fremdkraft-Bremsdruckerzeuger 10 des Betriebsbremsaggregats 2 erzeugt wird. Bei einem Ausfall des Fremdkraft-Bremsdruckerzeugers 10 kann der Bremsdruck durch Betätigung des Hauptbremszylinders 15 erzeugt werden. Das ist eine sogenannte Hilfsbremsung mit Muskelkraft und der Hauptbremszylinder 15 kann deswegen auch als Muskelkraft-Bremsdruckerzeuger aufgefasst werden.

Damit bei geschlossenen Trennventilen 12 Bremsflüssigkeit aus dem Hauptbremszylinder 15 verdrängt und Kolben des Hauptbremszylinders 15 und ein Bremspedal 16 bewegt werden können, weist das Betriebsbremsaggregat 2 einen Pedalwegsimulator 17 auf, der über ein Simulatorventil 18 an einen Bremskreis des Hauptbremszylinders 15 angeschlossen ist. Der Pedalwegsimulator 17 ist eine Kolben-Zylinder-Einheit mit einem federbeaufschlagten oder beispielsweise auch gasdruckbeaufschlagten Kolben.

In der beschriebenen und dargestellten Ausführungsform der Erfindung sind die Trennventile 12 und die Einlassventile 13 in ihren stromlosen Grundstellungen offene 2/2-Wege-Magnetventile und die Betriebsbremsventile 11 des Fremdkraft-Bremsdruckerzeugers 10, die Auslassventile 14 und das Simulatorventil 18 in ihren stromlosen Grundstellungen geschlossene 2/2-Wege-Magnetventile.

Die hydraulischen Bauelemente des Betriebsbremsaggregats 2 der erfindungsgemäßen elektrohydraulischen Fremdkraftbremsanlage 1, nämlich die Ventile 11, 12, 13, 14, 18, der Fremdkraft-Bremsdruckerzeuger 10, der Hauptbremszylinder 15, der Pedalwegsimulator 17 und weitere Bauelemente wie Drucksensoren sind in Aufnahmen eines Hydraulikblocks 19 des Betriebsbremsaggregats 2 angeordnet und durch eine Verbohrung des Hydraulikblocks 19 entsprechend dem gezeichneten hydraulischen Schaltplan der Fahrzeugbremsanlage 1 bzw. des Betriebsbremsaggregats 2 miteinander verbunden.

Ein druckloser Bremsflüssigkeitsvorratsbehälter 20, wie er von herkömmlichen Hauptbremszylindern bekannt ist, ist auf den Hydraulikblock 19 aufgesetzt und an ihn sind der Hauptbremszylinder 15 und durch ein Rückschlagventil 28 der Fremdkraft-Bremsdruckerzeuger 10 angeschlossen. In einem der beiden Bremskreise ist ein Testventil 21 zwischen dem Bremsflüssigkeitsvorratsbehälter 20 und dem Hauptbremszylinder 15 vorgesehen. Das Testventil 21 ist im Ausführungsbeispiel ebenfalls ein in seiner stromlosen Grundstellung offenes 2/2-Wege-Magnetventil. Dem Testventil 21 ist ein in Richtung des Hauptbremszylinders 15 durchströmbares Rückschlagventil 29 hydraulisch parallelgeschaltet, das allerdings nicht bei allen Ausführungen der Erfindung vorhanden ist.

Das Hilfsbremsaggregat 3 weist in jedem seiner beiden Bremskreise eine Hydropumpe 22 auf, die mit einem gemeinsamen Elektromotor 23 antreibbar sind. Die Hydropumpen 22 sind Kolbenpumpen, wobei andere Hydropumpen, beispielsweise Zahnradpumpen, ebenfalls möglich sind. Die Hydropumpen 22 bilden mit dem Elektromotor 23 Fremdkraft-Bremsdruckerzeuger 24.

Saugseiten der Hydropumpen 22 des Hilfsbremsaggregats 3 sind über Saugventile 25 und die bereits genannten Bremsleitungen, nämlich die Vorlaufleitungen V1, V2, mittels derer das Hilfsbremsaggregat 3 an das Betriebsbremsaggregat 2 angeschlossen ist, an die beiden Bremskreise des Hauptbremszylinders 15 des Betriebsbremsaggregats 2 angeschlossen. Druckseiten der Hydropumpen 22 des Hilfsbremsaggregats 3 sind über Druckventile 26 und die Vorlaufleitungen V1, V2 an die beiden Bremskreise des Hauptbremszylinders 15 des Betriebsbremsaggregats 2 angeschlossen. Außerdem sind die Druckseiten der Hydropumpen 22 des Hilfsbremsaggregats 3 über Bremsleitungen, nämlich die Rücklaufleitungen R1, R2, durch die das Hilfsbremsaggregat 3 an das Betriebsbremsaggregat 2 angeschlossen ist, an die Trennventile 12 des Betriebsbremsaggregats 2 angeschlossen. Dadurch ist eine Betätigung der Radbremsen 4 durch eine Erzeugung von Bremsdruck mit den Hydropumpen 22 des Hilfsbremsaggregats 3, die dessen Fremdkraft-Bremsdruckerzeuger 24 bilden, möglich. Radbremsdrücke in den Radbremsen 4 sind mit den Einlassventilen 13 und den Auslassventilen 14 des Betriebsbremsaggregats 2 regelbar, die die Radbremsdruckregelventilanordnungen bilden, sofern diese Ventile 13, 14 und ihre Regelungen funktionsfähig sind. Mit den die Fremdkraft-Bremsdruckerzeuger 24 bildenden Hydropumpen 22 des Hilfsbremsaggregats 3 wird der Bremsdruck im Falle eines Fehlers oder eines Ausfalls des Betriebsbremsaggregats 2 erzeugt. Eine solche Bremsung wird als Hilfsbremsung bezeichnet.

In der beschriebenen und dargestellten Ausführungsform der Erfindung sind die Saugventile 25 des Hilfsbremsaggregats 3 als in ihren stromlosen Grundstellungen geschlossene 2/2-Wege-Magnetventile und die Druckventile 26 als in ihren stromlosen Grundstellungen offene 2/2-Wege-Magnetventile ausgeführt. Bei einer Hilfsbremsung werden die Saugventile 25 geöffnet, so dass die Hydropumpen 22 des Hilfsbremsaggregats 3 Bremsflüssigkeit durch den Hauptbremszylinder 15 aus dem Bremsflüssigkeitsvorratsbehälter 20 des Betriebsbremsaggregats 2 ansaugen können. Des Weiteren werden die Druckventile 26 geschlossen, um die Radbremsen 4 mit einem Bremsdruck zu beaufschlagen.

Bei einer Betriebsbremsung werden die Radbremsen 4 durch die offenen Druckventile 26 des Hilfsbremsaggregats 3 und die in diesem Fall zu öffnenden Betriebsbremsventile 11 des Betriebsbremsaggregats 2 mit einem vom Fremdkraft-Bremsdruckerzeuger 10 des Betriebsbremsaggregats 2 oder durch die offenen Druckventile 26 des Hilfsbremsaggregats 3 und durch die offenen Trennventile 12 des Betriebsbremsaggregats 2 mit einem mit dem Fremdkraft-Bremsdruckerzeuger 10 erzeugten Bremsdruck beaufschlagt.

Für einen schnellen Bremsdruckaufbau bei einer Hilfsbremsung ist in einem Bremskreis die Hydropumpe 22 des Fremdkraft-Bremsdruckerzeugers 24 des Hilfsbremsaggregats 3 durch ein Rückschlagventil 30 an den Bremsflüssigkeitsvorratsbehälter 20 des Betriebsbremsaggregats 2 angeschlossen. Im Ausführungsbeispiel ist das Rückschlagventil 30 im Hydraulikblock 19 des Betriebsbremsaggregats 2 angeordnet. Vorzugsweise ist die Hydropumpe 22 eines Primärkreises durch das Rückschlagventil 30 an den Bremsflüssigkeitsvorratsbehälter 20 angeschlossen, möglich ist aber auch der Anschluss der Hydropumpe 22 eines Sekundärkreises durch ein Rückschlagventil 30 oder beider Bremskreise durch je ein Rückschlagventil 30 an den Bremsflüssigkeitsvorratsbehälter 20 (nicht dargestellt). Der Primärkreis ist der Bremskreis, der unmittelbar über eine Pedalstange mit dem Bremspedal 16 betätigt wird.

Die hydraulischen Bauelemente des Hilfsbremsaggregats 3, nämlich die Hydropumpen 22, die Ventile 25, 26 und weitere Bauelemente wie Drucksensoren, sind in einem Hydraulikblock 27 des Hilfsbremsaggregats 3 angeordnet und durch eine Verbohrung des Hydraulikblocks 27 entsprechend dem gezeichneten hydraulischen Schaltplan miteinander verbunden, was auch als Verschaltung der hydraulischen Bauelemente 22, 25, 26 bezeichnet werden kann.

Der Bremsflüssigkeitsvorratsbehälter 20 weist für jeden Bremskreis eine Kammer 31', 31‴ und zusätzlich für den Fremdkraft-Bremsdruckerzeuger 10 des Betriebsbremsaggregats 2 eine Kammer 31", insgesamt also drei Kammern 31', 31", 31‴ auf. Das Rückschlagventil 30, durch das eine Hydropumpe 22 des Hilfsbremsaggregats 3 an den Bremsflüssigkeitsvorratsbehälter 20 angeschlossen ist, ist an die gleiche Kammer 31' des Bremsflüssigkeitsvorratsbehälters 20 angeschlossen wie das Testventil 21. Die Hydropumpen 22 des Hilfsbremsaggregats 3 sind an verschiedene Kammern 31', 31‴ des Bremsflüssigkeitsvorratsbehälters 20 angeschlossen. Der Fremdkraft-Bremsdruckerzeuger 10 des Betriebsbremsaggregats 2 ist an eine eigene Kammer 31" beziehungsweise an eine ander Kammer 31" des Bremsflüssigkeitsvorratsbehälters 20 angeschlossen als die Hydropumpen 22 des Hilfsbremsaggregats 3.

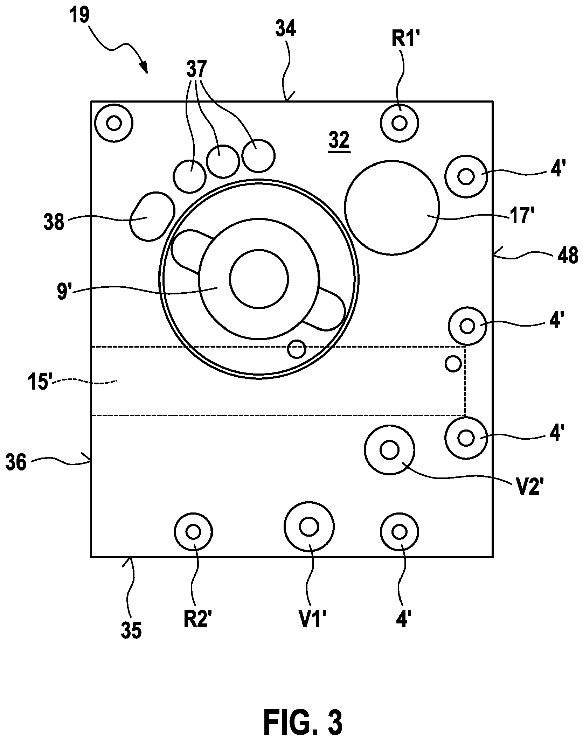

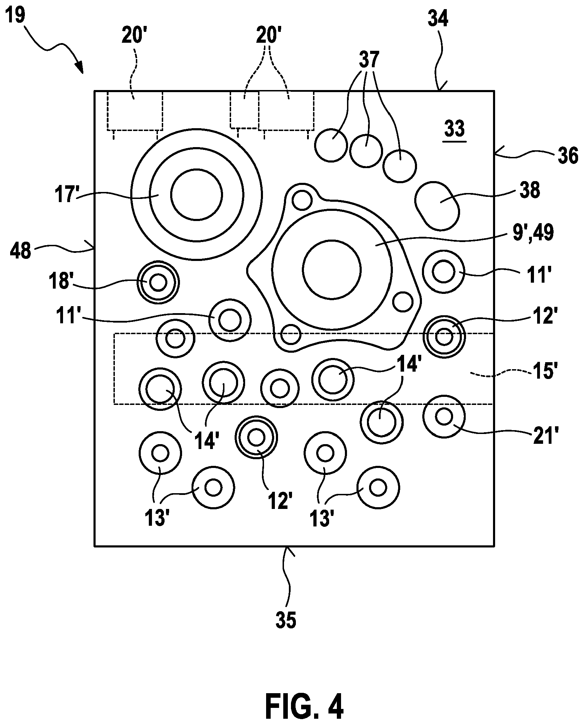

Figur 3 zeigt eine Motorseite 32 und Figur 4 eine Ventilseite 33 des Hydraulikblocks 19 des Betriebsbremsaggregats 2. Der Hydraulikblock 19 ist im Ausführungsbeispiel ein flacher, quaderförmiger Metallblock, der einer mechanischen Befestigung und hydraulischen Verschaltung der hydraulischen Bauelemente der Fahrzeugbremsanlage 1 dient. Bestückt mit den hydraulischen Bauelementen bildet der Hydraulikblock 19 das Betriebsbremsaggregat 2 der Fahrzeugbremsanlage 1. "Flach" bedeutet, dass der Hydraulikblock 19 ungefähr drei bis vier mal so breit oder lang wie dick ist. Zwei gegenüberliegende große Seiten des Hydraulikblocks 19 sind im Ausführungsbeispiel nahezu quadratisch und bilden die Motorseite 32 und Ventilseite 33. In Figuren 3 und 4 ist der Hydraulikblock 19 unbestückt gezeichnet, das heißt ohne die hydraulischen Bauelemente.

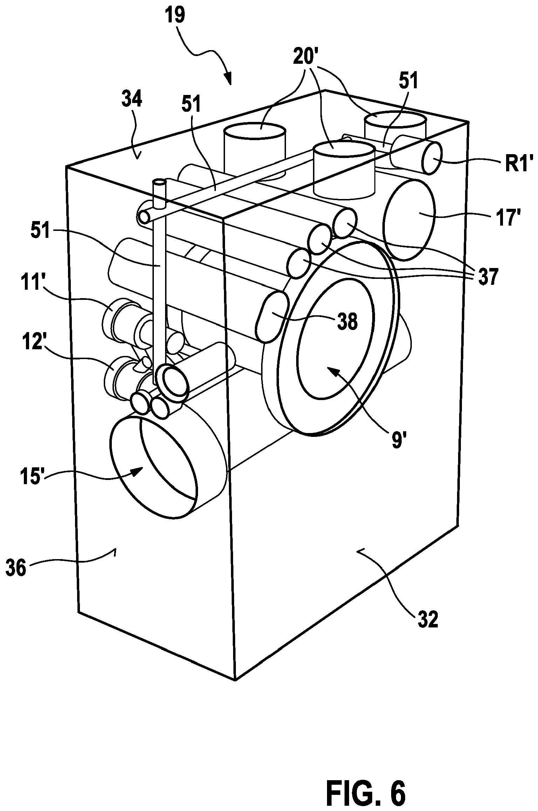

Eine Schmalseite des Hydraulikblocks 19, die hier als Oberseite 34 bezeichnet wird, weist drei zylindrische Sacklöcher als Anschlüsse 20' für den Bremsflüssigkeitsvorratsbehälter 20 auf, der auf der Oberseite 34 des Hydraulikblocks 19 angeordnet wird (vgl. Fig. 6). Dabei gelangen Anschlussnippel an einem Boden des Bremsflüssigkeitsvorratsbehälters 20 in die die Anschlüsse 20' bildenden Sacklöcher des Hydraulikblocks 19 und sind dort mit O-Ringen abgedichtet.

In dem Hydraulikblock 19 ist eine Hauptbremszylinderbohrung 15', die den Hauptbremszylinder 15 bildet, parallel zur Oberseite 34 und in einer Mitte zwischen der Motorseite 32 und der Ventilseite 33 angebracht. In Figuren 3 und 4 ist die Hauptbremszylinderbohrung 15' mit Strichlinien dargestellt. Sie befindet sich im Ausführungsbeispiel etwas unterhalb einer Mitte des Hydraulikblocks 19 zwischen der Oberseite 34 und einer gegenüberliegenden Unterseite 35 des Hydraulikblocks 19, so dass die Hauptbremszylinderbohrung 15' etwa tangential an einer Mittelebene des Hydraulikblocks 19 zwischen der Oberseite 34 und der Unterseit 15 anliegt.

Eine Fremdkraftzylinderbohrung 9', die den Zylinder 9 des Fremdkraft-Bremsdruckerzeugers 10 bildet, ist senkrecht zu der Hauptbremszylinderbohrung 15' in der Motorseite 32 des Hydraulikblocks 19 angebracht und steht auf der Ventilseite 33 als eine Art Dom 49 über. Die Fremdkraftzylinderbohrung 9' befindet sich etwas oberhalb der Hauptbremszylinderbohrung 15', das heißt zwischen der Hauptbremszylinderbohrung 15' und der Oberseite 34 des Hydraulikblocks 19. Die Fremdkraftzylinderbohrung 19 geht in geringem Abstand an der Hauptbremszylinderbohrung 15' vorbei. Sie ist etwas außermittig in Richtung einer Befestigungsseite 36 des Hydraulikblocks 19 versetzt angeordnet.

Der Elektromotor 7 des Fremdkraft-Bremsdruckerzeugers 10, der in Figur 3 nicht gezeichnet ist, wird koaxial zu der Fremdkraftzylinderbohrung 9' außen an der Motorseite 32 des Hydraulikblocks 19 angeordnet. Ein Planetengetriebe als Untersetzungsgetriebe und der Gewindetrieb 8, der im Ausführungsbeispiel ein Kugelgewindetrieb ist, werden koaxial zu der Fremdkraftzylinderbohrung 9' zwischen zum Elektromotor 7 und dem Kolben 6 des Fremdkraft-Bremsdruckerzeugers 10 angeordnet (in Figur 3 nicht gezeichnet)

Die Befestigungsseite 36 ist eine Schmalseite des Hydraulikblocks 19, an der die Hauptbremszylinderbohrung 15' offen ist. Die Befestigungsseite 36 grenzt an die die Oberseite 34, die Unterseite 35, die Motorseite 32 und an die Ventilseite 33 an und ist zu einer Befestigung des Hydraulikblocks 19 an einer nicht dargestellten Spritzwand eines Kraftwagens vorgesehen. Der Hydraulikblock 19 wird so an der Spritzwand des Kraftwagens befestigt, dass sich die Oberseite 34 mit dem Bremsflüssigkeitsvorratsbehälter 31 oben befindet. Die Hauptbremszylinderbohrung 15' ist an der Befestigungsseite 36 des Hydraulikblocks 19 offen, so dass ein Hauptbremszylinderkolben mittels eines Fußbremspedals, das an einer gegenüberligenden Seite der Spritzwand befestigt wird, über eine Pedalstange, die den Hauptbremszylinderkolben gelenkig mit dem Fußbremspedal verbindet, in der Hauptbremszylinderbohrung 15' verschiebbar ist.

In der Ventilseite 33 des Hydraulikblocks 19 ist parallel zu der Fremdkraftzylinderbohrung 9' und senkrecht zu der Hauptbremszylinderbohrung 15' eine Zylinderbohrung 17' des Pedalwegsimulators 17 angebracht. Die Zylinderbohrung 17' befindet sich im Ausführungsbeispiel zwischen der Hauptbremszylinderbohrung 15' und der Oberseite 34 des Hydraulikblocks 19 und näher an der Oberseite 34 als an der Hauptbremszylinderbohrung 15' und zwischen der Fremdkraftzylinderbohrung 9' und einer der Befestigungsseite 36 gegenüberliegenden Schmalseite 48 des Hydraulikblocks 19.

Aufnahmen für die Magnetventile 12, 13, 14, 18 und Aufnahmen für weitere Bauelemente wie Drucksensoren sind in der Ventilseite 33 des Hydraulikblocks 19 angebracht. Die Aufnahmen, die in Figur 4 mit der Bezugszahl des jeweiligen Magnetventils oder sonstigen Bauelements ergänzt um einen "'" bezeichnet sind, sind zylindrische, teilweise durchmessergestufte Senkungen oder Sacklöcher im Hydraulikblock 19. Die hydraulischen Bauelemente sind in die Aufnahmen eingesetzt und umlaufend druckdicht verstemmt. Von den Magnetventilen 12, 13, 14, 18 befinden sich hydraulische, die eigentlichen Ventile bildende Abschnitte in den Aufnahmen, Anker und Magnetspulen, die in einem Ventildom untergebracht sind, stehen von der Ventilseite 33 des Hydraulikblocks 19 ab.

Der Hydraulikblock 19 des Betriebsbremsaggregats 2 ist entsprechend dem in Figur 1 gezeigten hydraulischen Schaltplan verbohrt. Mit "Verbohrt" beziehungsweise "Verbohrung" sind die in dem Hydraulikblock 19 angebrachten Zylinderbohrungen, Aufnahmen für die Magnetventile und Anschlussbohrungen sowie die sie entsprechend dem hydraulischen Schaltplan verbindende, Leitungen bildenden Bohrungen gemeint. Der Hydraulikblock 19 ist kartesisch verbohrt, das heißt die Bohrungen, Aufnahmen, Anschlüsse, Leitungen usw. sind parallel und senkrecht zueinander und zu Seiten und Kanten des Hydraulikblocks 19 im Hydraulikblock 19 angebracht. Das schließt einzelne, schräg verlaufende Leitungen und Bohrungen nicht aus.

Das Hilfsbremsaggregat 3 wird durch vier Bremsleitungen, die beiden Vorlaufleitungen und die beiden Rücklaufleitungen, und die vier Radbremsen 4 werden ebenfalls durch Bremsleitungen mit dem Hydraulikblock 19 des Betriebsbremsaggregats 2 verbunden. Zum Anschluss weist der Hydraulikblock 19 Sacklöcher auf, die hier als Anschlüsse V1', V2', R1', R2', 4' bezeichnet werden. Die Anschlüsse V1', V2', R1', R2', 4' sind in der Motorseite 32 des Hydraulikblocks 19 angebracht. Die Bremsleitungen werden mit nicht dargestellten Einpressnippeln in sogenannter Self-Clinch-Technik druckdicht an den Anschlüssen befestigt sind. Möglich ist der Anschluss der Bremsleitungen beispielsweise auch mit Schraubnippeln.

Eine als Bohrung ausgeführte Leitung 51 verbindet den Anschluss R1' für die Rücklaufleitung R1 des Primärkreises mit der Aufnahme 12' für das Trennventil 12. Diese Leitung 51 führt wie in Figur 6 zu sehen koaxial vom Grund des Anschluss R1' für die Rücklaufleitung R1 bis in eine Mitte des Hydraulikblocks 19 zwischen der Motorseite 32 und der Ventilseite 33 und dann nach einer Abwinklung in Richtung der Befestigungsseite 36 weiter in einer Mittelebene des Hydraulikblocks 19 in der Mitte zwischen der Motorseite 32 und der Ventilseite 33, bis sie nach einer weiteren Abwinklung nahe der Befestigungsseite 36 nach unten in Richtung der Hauptbremszylinderbohrung 15' führt, von wo die Leitung 51 nach einer weiteren Abwinklung koaxial in die Aufnahme 12' für das Trennventil 12 mündet.

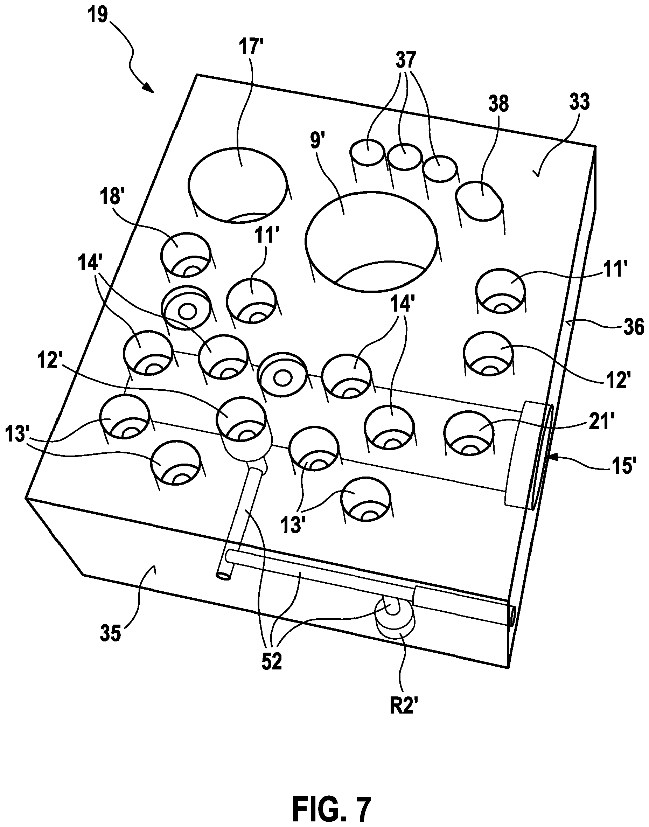

Vom Anschluss R2' für die Rücklaufleitung R2 des Sekundärkreises führt wie in Figur 7 zu sehen eine Leitung 52 ebenfalls in der Mittelebene des Hydraulikblocks 19 zwischen der Motorseite 32 und der Ventilseite 33 parallel zur Unterseite 35 des Hydraulikblocks 19 in Richtung der der Befestigungsseite 36 gegenüberliegenden Schmalseite 48 und nach einer Abwinklung nach oben zu der Aufnahme 12' für das Trennventil 12.

Es sind drei Anschlüsse 4' für zu drei Radbremsen 4 führende Bremsleitungen entlang der der Befestigungsseite 36 gegenüberliegenden Schmalseite 48 in der Motorseite 32 und ein Anschluss 4' für eine vierte Radbremse 4 von der Schmalseite 48 weg versetzt nahe der Unterseite 35 des Hydraulikblocks 19 in der Motorseite 32 angebracht. "Nahe" bedeutet einen Abstand von nicht mehr als einem Radius des jeweiligen Anschlusses.

Zwei Anschlüsse R2', V1' für das Hilfsbremsaggregat 3 sind ebenfalls nahe an der Unterseite 35 und zwei weitere Anschlüsse V2', R1' von einer Achse der Fremdkraftzylinderbohrung 9' aus unter einem Winkel von etwa 45° in Richtung der Oberseite 34 und in Richtung der Unterseite 35 und in Richtung der der Befestigungsseite 36 gegenüberliegenden Schmalseite 48 versetzt in dem Hydraulikblock 19 angebracht.

Zwischen der Fremdkraftzylinderbohrung 9' und der Oberseite 34 sind drei von der Motorseite 32 zu der Ventilseite 33 durchgehende Durchgangslöcher als Motoranschlussbohrungen 37 zu einer Stromversorgung des Elektormotors 7 des Fremdkraft-Bremsdruckerzeugers 10 im Hydraulikblock 19 angebracht. Die Motoranschlussbohrungen 37 sind auf einem gedachten Bogen um den die Fremdkraftzylinderbohrung 9' herum zwischen der Fremdkraftzylinderbohrung 9' und der Oberseite 34 im Hydraulikblock 19 angebracht. Ebenfalls auf dem gedachten Bogen, auf dem die Motoranschlussbohrungen 37 angebracht sind, ist eine Signalbohrung 38 für Steuerleitungen und/oder Signalleitungen zu oder von dem Elektromotor 7 in dem Hydraulikblock 19 angebracht.

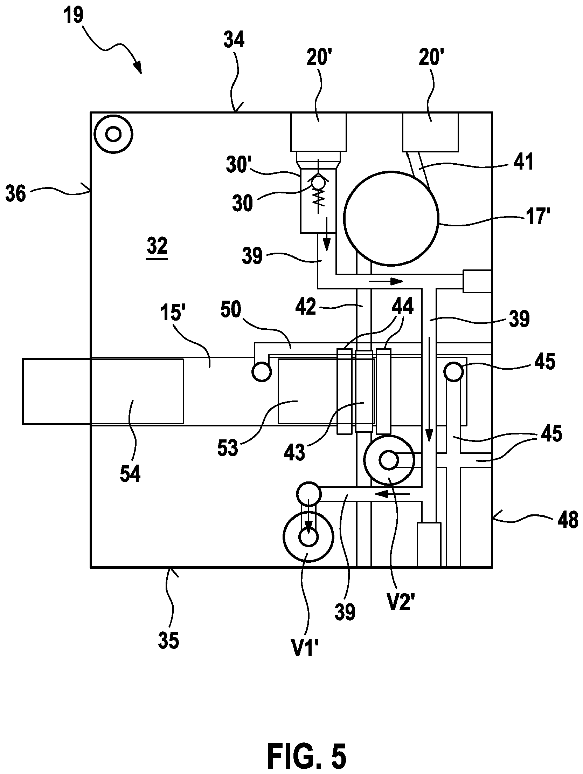

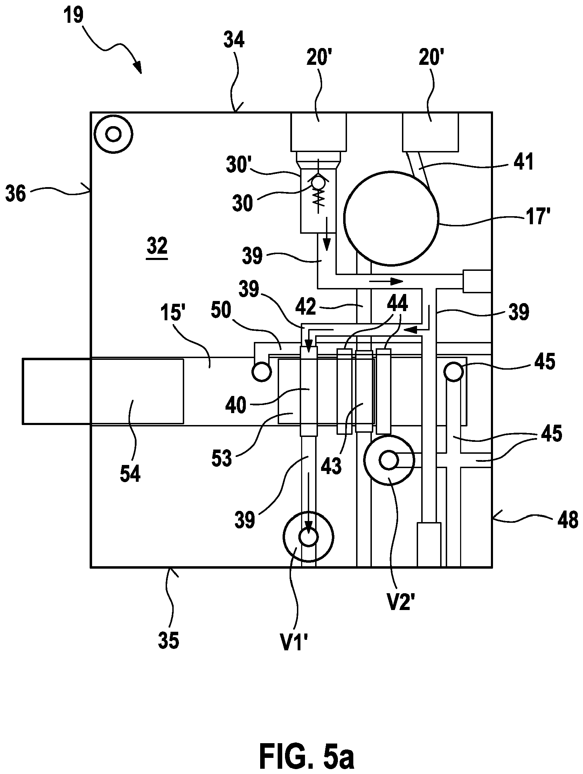

Figur 5 zeigt einen Teil der Verbohrung des erfindungsgemäßen Hydraulikblocks 19 des Betriebsbremsaggregats 2 der elektrohydraulischen Fremdkraftbremsanlage 1. In Figur 5 und auch in Figuren 6 und 7 ist der Hydraulikblock 19 durchsichtig und nur ein Teil der Verbohrung des Hydraulikblocks 19 gezeichnet. Figur 5 zeigt eine Verbindung eines der Anschlüsse 20' für den Bremsflüssigkeitsvorratsbehälter 20 in der Oberseite 34 des Hydraulikblocks 19 mit dem Anschluss V1' für die eine Vorlaufleitung V1 zum Hilfsbremsaggregat 3. Figur 5 zeigt einen Blick auf die Motorseite 32 des Hydraulikblocks 19, die Befestigungsseite 36 befindet sich links. Eine als Bohrung beziehungsweise als mehrere zueinander rechtwinklige und zu den Seiten des Hydraulikblocks 19 parallele beziehungsweise senkrechte Bohrungen ausgeführte Leitung 39 führt zunächst koaxial von einem Grund des Anschlusses 20' für den Bremsflüssigkeitsvorratsbehälter 20 nach unten zwischen der Fremdkraftzylinderbohrung 9' und der Zylinderbohrung 17' des Pedalwegsimulators 17 bis unter, das heißt bis zu einer der Unterseite 35 des Hydraulikblocks 19 zugewandten Seite der Zylinderbohrung 17' des Pedalwegsimulators 17. Unter der Zylinderbohrung 17' verläuft die Leitung 39 weiter in Richtung der der Befestigungsseite 36 gegenüberliegenden Schmalseite 48 des Hydraulikblocks 19, um dann unterhalb der Zylinderbohrung 17' wieder rechtwinklig nach unten in Richtung der Unterseite 35 des Hydraulikblocks 19 abzubiegen. Dieser nach unten führende Teil der Leitung 39 zur Vorlaufleitung geht auf der Motorseite 32 des Hydraulikblocks 19 an der Hauptbremszylinderbohrung 15' vorbei. Ungefähr in einer Mitte zwischen der Hauptbremszylinderbohrung 15' winkelt die Leitung 39 wieder rechtwinklig zurück in Richtung der Befestigungsseite 36 ab und mündet dann mit einem wieder nach unten in Richtung der Unterseite 35 führenden letzten Abschnitt in den Anschluss V1' für die Vorlaufleitung, der sich ungefähr in einer Mitte zwischen der Befestigungsseite 36 und der ihr gegenüberliegenden Schmalseite 48 nahe der Unterseite 35 in der Motorseite 32 des Hydraulikblocks 19 befindet.

Das in Figur 5 als Schaltsymbol gezeichnete Rückschlagventil 30 in der vom Bremsflüssigkeitsvorratsbehälter 20 zur Vorlaufleitung führenden Leitung 39 befindet sich in einer Aufnahme 30', die als durchmesserkleinerer Fortsatz koaxial an einem Grund des Sacklochs angebracht ist, das den Anschluss 20' für den Bremsflüssigkeitsvorratsbehälter 20 bildet.

Anstatt an der Hauptbremszylinderbohrung 15' vorbei kann die Leitung 39 vom Bremsflüssigkeitsvorratsbehälter 20 zur Vorlaufleitung V1 auch von der Aufnahme 20' für den Bremsflüssigkeitsvorratsbehälter 20 nach unten in Richtung der Hauptbremszylinderbohrung 15', nach einer Abwinklung parallel zur Hauptbremszylinderbohrung 15' in Richtung der der Befestigungsseite 36 gegenüberligenden Schmalseite 48, nach einer weiteren Abwinklung wieder nach unten in Richtung der Hauptbremszylinderbohrung 15' und wieder nach einer Abwinklung parallel zur Hauptbremszylinderbohrung 15' zurück in Richtung der Befestigungsseite 36 bis etwa in eine Mitte des Hydraulikblocks 19 zwischen der Befestigungsseite 36 und der gegenüberliegenden Schmalseite 48 des Hydraulikblocks 19. Von dort führt die Leitung 39 durch die Hauptbremszylinderbohrung 15' hindurch nach unten zum Anschluss V1' der Vorlaufleitung V1. Die Hauptbremszylinderbohrung 15' hat bei dieser Ausführung der Erfindung einen etwa halbkreisförmigen Hinterschnitt 40, der an einer Innenseite der Hauptbremszylinderbohrung 15' um einen Hauptbremszylinderkolben/Sekundärkolben 53 herum führt. Diese alternative Leitungsführung zeigt Figur 5a. Der Hauptbremszylinderkolben/Sekundärkolben 53 schließt den Hinterstich 40 an seiner Innenseite, so dass er nicht mit der Hauptbremszylinderbohrung 15' kommuniziert. Ein Hauptbremszylinderkolben/Primärkolben 54 und der Sekundärkolben 53 sind schematisiert in Figuren 5 und 5a eingezeichnet.

Zwecks einer sogenannten "thermischen Entlastung" kommuniziert eine Rückseite eines nicht dargestellten Simulatorkolbens des Pedalwegsimulators 17 mit dem drucklosen Bremsflüssigkeitsvorratsbehälter 20. Die Rückseite des Simulatorkolbens ist die Seite, die bei einer Betätigung des Hauptbremszylinders 15 nicht mit Druck beaufschlagt wird. "Thermische Entlastung" bedeutet, dass Bremsflüssigkeit auf der Rückseite des Simulatorkolbens nicht eingeschlossen ist sondern dass bei einer Volumenvergrößerung bei Erwärmung Bremsflüssigkeit von der Rückseite des Simulatorkolbens in den Bremsflüssigkeitsvorratsbehälter 20 abfließen kann. Die thermische Entlastung des Simulatorkolbens beziehungsweise des Pedalwegsimulators 17 erfolgt im Ausführungsbeispiel durch eine Leitung 41, die von einem Grund eines der Anschlüsse 20' für den Bremsflüssigkeitsvorratsbehälter 20 in der Oberseite 34 des Hydraulikblocks 19 nach unten zu der Zylinderbohrung 17' des Pedalwegsimulators 17 führt. Im Ausführungsbeispiel ist die Leitung 41 schräg gebohrt, also nicht parallel oder rechtwinklikg zu den Seiten und Kanten des Hydraulikblocks 19.

Der Anschluss einer Kammer des Hauptbremszylinders 15, im Ausführungsbeispiel einer Sekundärkammer, an den Bremsflüssigkeitsvorratsbehälter 20 erfolgt im Ausführungsbeispiel auf der Rückseite des Simulatorkolbens durch die Zylinderbohrung 17' des Pedalwegsimulators 17 hindurch, von der eine Leitung 42 nach unten zu einer umlaufenden Nut 43 der Hauptbremszylinderbohrung 15' führt, die einen nicht dargestellten Hauptbremszylinderkolben, im Ausführungsbeispiel einen sogenannten Sekundärkolben oder Schwimmkolben, umschließt. Zu dem Hauptbremszylinderkolben ist die Nut 43 beiderseits durch nicht dargestellte Dichtringe abgedichtet, die in umlaufenden Dichtungsnuten 44 der Hauptbremszylinderbohrung 15' beiderseits der Nut 43 angeordnet werden. Überfährt der Hauptbremszylinderkolben bei einer Betätigung des Hauptbremszylinders 15 die Nut 43, trennt er den Hauptbremszylinder 15 hydraulisch vom Bremsflüssigkeitsvorratsbehälter 20, so dass bei einer weiteren Verschiebung des Hauptbremszylinderkolbens ein Bremsdruck im Hauptbremszylinder 15 erzeugt wird.

Eine erste Entlüftungsleitung 45 für den Hauptbremszylinder 15 ist an einer der Oberseite 34 des Hydraulikblocks 19 zugewandten Umfangsstelle an die Hauptbremszylinderbohrung 15 angeschlossen. Das bedeutet, die Entlüftungsleitung 45 mündet oben in die Hauptbremszylinderbohrung 15', wenn der Hydraulikblock 19 wie vorgesehen mit seiner Oberseite 34 oben angeordnet ist. Dort sammeln sich eventuell in der Bremsflüssigkeit enthaltene Luftblasen, wodurch sich der Hauptbremszylinder 15 entlüften lässt. Im Ausführungsbeispiel führt die erste Entlüftungsleitung 45 tangential von der der Oberseite 34 des Hydraulikblocks 19 zugewandten Umfangsstelle der Hauptbremszylinderbohrung 15' in Richtung der Motorseite 32 und nach einer Abwinklung nach unten weiter zwischen der Motorseite 32 und der Hauptbremszylinderbohrung 15' hindurch, bis sie nach einer weiteren Abwinklung in Richtung der Befestigungsseite 36 in einen der beiden Anschlüsse V2' für die Vorlaufleitung zum Hilfsbremsaggregat 3 führt. Im Ausführungsbeispiel mündet die Entlüftungsleitung 45 in die Sekundärkammer des Hauptbremszylinders 15. Zwischen ihren beiden Abwinklungen verläuft die erste Entlüftungsleitung 45 schräg zur Motorseite 32 und zur Ventilseite 33, sie befindet sich in Höhe der Hauptbremszylinderbohrung 15' nahe der Motorseite 32 und nahe der Unterseite 35 des Hydraulikblocks 19 nahe der Ventilseite 32. Einen zu den Seiten und Kanten des Hydraulikblocks 19 parallelen beziehungsweise senkrechten Verlauf der Entlüftungsleitung 45 schließt die Erfindung nicht aus.

Zu einer eventuellen Entlüftung einer Primärkammer des Hauptbremszylinders 15 ist eine zweite Entlüftungsleitung 50 parallel zum und nahe an der Hauptbremszylinderbohrung 15' im Hydraulikblock 19 angebracht, die an der der Befestigungsseite 36 gegenüberliegenden Schmalseite 48 des Hydraulikblocks 19 mündet. Die zweite Entlüfungsleitung 50 befindet sich etwa in Höhe der der Oberseite 34 des Hydraulikblocks 19 zugewandten Umfangsstelle der Hauptbremszylinderbohrung 15' auf einer der Motorseite 32 zugewandten Seite der Hauptbremszylinderbohrung 15' und mündet nach einer Abwinklung tangentil an der der Oberseite 34 des Hydraulikblocks 19 zugewandten Umfangsstelle in die Hauptbremszylinderbohrung 15'. Die zweite Entlüfungsleitung 50 kreuzt die Leitung 39, die den Anschluss 20' für den Bremsflüssigkeitsvorratsbehälter 20 mit dem Anschluss V1' für die Vorlaufleitung V1 zum Hilfsbremsaggregat 3 verbindet.

Eine Aufnahme 21' für das Testventil 21 ist nahe der Befestigungsseite 36 an einer Unterseite der Hauptbremszylinderbohrung 15' in der Ventilseite 33 des Hydraulikblocks 19 angebracht (siehe Figur 6). Eine Achse der Aufnahme 21' für das Testventil 21 verläuft tangential zu einer der Unterseite 35 des Hydraulikblocks 19 zugewandten Umfangsstelle der Hauptbremszylinderbohrung 15'. Eine Verbindung des Testventils 21 mit dem Bremsflüssigkeitsvorratsbehälter 20 erfolgt im Ausführungsbeispiel mit einer aufgrund der Verbohrung des Hydraulikblocks 19 aufwendigen Leitungsführung: eine Leitung 46 führt zunächst von einem Grund eines der Anschlüsse 20' für den Bremsflüssigkeitsvorratsbehälter 20 in der Oberseite des Hydraulikblocks 34 nach unten zu einer Nut 47, die den Kolben 6 des Fremdkraft-Bremsdruckerzeugers 10 in der Fremdkraftzylinderbohrung 9 umschließt. Die Nut 47 ist beiderseits mit Dichtringen zum Kolben 6 des Fremdkraft-Bremsdruckerzeugers 10 abgedichtet, so dass die Leitung 46 nicht mit dem Zylinder 9 des Fremdkraft-Bremsdruckerzeugers 10 kommuniziert. Von der Nut 47 führt die Leitung 46 weiter in Richtung der der Befestigungsseite 36 gegenüberliegenden Schmalseite 48 des Hydraulikblocks 19 und nach einer Abwinklung nach unten in die den Hauptbremszylinderkolben umschließenden Nut 43 in der Hauptbremszylinderbohrung 15', die wie oben beschrieben mit der Aufnahme 21' für das Testventil 21 kommuniziert.

## Patentansprüche

1. Hydraulikblock für ein Betriebsbremsaggregat einer hydraulischen Fremdkraftbremsanlage für einen autonom fahrenden Kraftwagen, wobei der Hydraulikblock (19) eine Oberseite (34), die zu einem Aufsetzen eines Bremsflüssigkeitsvorratsbehälters (20) vorgesehen ist und die Anschlüsse (20') für den Bremsflüssigkeitsvorratsbehälter (20) aufweist, eine an die Oberseite (34) angrenzende Befestigungsseite (36), die zu einer Befestigung des Hydraulikblocks (19) an einer Spritzwand des Kraftwagens ausgebildet ist und an der eine Hauptbremszylinderbohrung (15') mündet, eine an die Oberseite (34) und die Befestigungsseite (36) angrenzende Motorseite (32), an der ein Elektromotor (7) zu einem Antrieb eines Kolbens (6) eines Fremdkraft-Bremsdruckerzeugers (10) anordenbar ist, und Anschlüsse (4') zu einem Anschluss hydraulischer Radbremsen (4') und zu einem Anschluss eines Hilfsbremsaggregats (3) durch Bremsleitungen an das Betriebsbremsaggregat (2) in der Motorseite (32) aufweist, **dadurch gekennzeichnet, dass** eine Fremdkraftzylinderbohrung (9') zwischen der Oberseite (34) und der Hauptbremszylinderbohrung (15') in der Motorseite (32) des Hydraulikblocks (19) angebracht ist, und dass der Hydraulikblock (19) einen Anschluss (V2', R1') für das Hilfsbremsaggregat (3) von einer Achse der Fremdkraftzylinderbohrung (9') in einem Winkel von etwa 45° zu der Oberseite (34) des Hydraulikblocks (19) auf einer der Befestigungsseite (36) des Hydraulikblocks (19) abgewandten Seite der Fremdkraftzylinderbohrung (9') und/oder einen Anschluss (V1', R2') für das Hilfsbremsaggregat (3) nahe einer der Oberseite (34) gegenüberliegenden Unterseite (35) in der Motorseite (32) des Hydraulikblocks (19) aufweist.

2. Hydraulikblock nach Anspruch 1, **dadurch gekennzeichnet, dass** einer der Anschlüsse (20') für den Bremsflüssigkeitsvorratsbehälter (20) in der Oberseite (34) des Hydraulikblocks (19) eine konzentrische Aufnahme (30') für ein Rückschlagventil (30) aufweist, von der eine Leitung (39) in dem Hydraulikblock (19) zu einem der Anschlüsse (V2') für das Hilfsbremsaggregat (3) führt.

3. Hydraulikblock nach Anspruch 2, **dadurch gekennzeichnet, dass** die Leitung (39) von der Aufnahme (30') für das Rückschlagventil (30) seitlich an der Fremdkraftzylinderbohrung (9') vorbei, nach einer Abwinklung unter der Zylinderbohrung (17') des Pedalwegsimulators (17) von der Befestigungsseite (36) weg, nach einer weiteren Abwinklung unter der Zylinderbohrung (17') des Pedalwegsimulators (17) seitlich an der Hauptbremszylinderbohrung (15') vorbei wieder weiter in Richtung der Unterseite (35) des Hydraulikblocks (19), und nach noch einer Abwinklung zurück in Richtung der Befestigungsseite (36) des Hydraulikblocks (19) bis zu dem einen Anschluss (V2') für das Hilfsbremsaggregat (3) führt, der nahe an Unterseite (35) in der Motorseite (32) des Hydraulikblocks (19) angebracht ist.

4. Hydraulikblock nach einem oder mehreren der Ansprüche 1 bis 3, **dadurch gekennzeichnet, dass** die Hauptbremszylinderbohrung (15') eine wendelförmige Nut (40) aufweist, die Bestandteil einer Leitung (39) in dem Hydraulikblock (19) ist, die einen der Anschlüsse (20') für den Bremsflüssigkeitsvorratsbehälter (20) in der Oberseite (34) des Hydraulikblocks (19) mit einem der Anschlüsse (V2') für das Hilfsbremsaggregat (3) in der Motorseite (32) des Hydraulikblocks (19) verbindet.

5. Hydraulikblock nach einem oder mehreren der vorhergehenden Ansprüche, **dadurch gekennzeichnet, dass** eine Leitung (41) von einem der Anschlüsse (20') für den Bremsflüssigkeitsvorratsbehälter (20) zu einer Rückseite eines Simulatorkolbens in die Zylinderbohrung (17') für einen Pedalwegsimulator (17) führt.

6. Hydraulikblock nach einem oder mehreren der vorhergehenden Ansprüche, **dadurch gekennzeichnet, dass** eine Leitung (42) von der Zylinderbohrung (17') des Pedalwegsimulators (17) zu einer einen Hauptbremszylinderkolben umschließenden Nut (43) in der Hauptbremszylinderbohrung (15') führt.

7. Hydraulikblock nach einem oder mehreren der vorhergehenden Ansprüche, **dadurch gekennzeichnet, dass** eine Entlüftungsleitung (45) an einer der Oberseite (34) des Hydraulikblocks (19) zugewandten Umfangsstelle mit der Hauptbremszylinderbohrung (15') kommuniziert.

8. Hydraulikblock nach einem oder mehreren der vorhergehenden Ansprüche, **dadurch gekennzeichnet, dass** einer der Anschlüsse (R1') für das Hilfsbremsaggregat (3) nahe der Oberseite (34) in der Motorseite (32) des Hydraulikblocks (19) angebracht ist, dass von dort eine Leitung (51) in Richtung zu der Befestigungsseite (36) des Hydraulikblocks (19) und nach einer Abwinklung nahe der Befestigungsseite (36) in Richtung der Unterseite (35) des Hydraulikblocks (19) zu einer Aufnahme (12') für ein Trennventil (12) führt, das etwa in einer Höhe mit der Achse der Fremdkraftzylinderbohrung (9') in einer der Motorseite (32) gegenüberliegenden Ventilseite (33) des Hydraulikblocks (19) angebracht ist.

9. Hydraulikblock nach einem oder mehreren der vorhergehenden Ansprüche, **dadurch gekennzeichnet, dass** von dem Anschluss (R2') für das Hilfsbremsaggregat (3) nahe der Unterseite (35) in der Motorseite (32) des Hydraulikblocks (19) eine Leitung (52) weg von der Befestigungsseite (36) und nach einer Abwinklung nach oben zu einer Aufnahme (12') für ein Trennventil (12) in der Ventilseite (33) des Hydraulikblocks (19) führt.

## Claims

1. Hydraulic block for a service brake assembly of a hydraulic external-force brake installation for an autonomously driving motor vehicle, wherein the hydraulic block (19) has a top side (34), which is intended for mounting of a brake fluid reservoir (20) and has connections (20') for the brake fluid reservoir (20), a fastening side (36), which adjoins the top side (34) and is configured for fastening of the hydraulic block (19) to a bulkhead of the motor vehicle and at which a master brake cylinder bore (15') opens out, a motor side (32), which adjoins the top side (34) and the fastening side (36) and on which there is able to be arranged an electric motor (7) for driving a piston (6) of an external-force brake pressure generator (10), and connections (4') for connection of hydraulic wheel brakes (4') and for connection of an auxiliary brake assembly (3) by way of brake lines to the service brake assembly (2) in the motor side (32), **characterized in that** an external-force cylinder bore (9') is provided in the motor side (32) of the hydraulic block (19) between the top side (34) and the master brake cylinder bore (15'), and **in that** the hydraulic block (19) has a connection (V2', R1') for the auxiliary brake assembly (3) on a side, directed away from the fastening side (36) of the hydraulic block (19), of the external-force cylinder bore (9') at an angle of approximately 45° to the top side (34) of the hydraulic block (19) from an axis of the external-force cylinder bore (9') and/or has a connection (V1', R2') for the auxiliary brake assembly (3) close to a bottom side (35), opposite the top side (34), in the motor side (32) of the hydraulic block (19).

2. Hydraulic block according to Claim 1, **characterized in that** one of the connections (20') for the brake fluid reservoir (20) in the top side (34) of the hydraulic block (19) has a concentric receptacle (30') for a check valve (30), from which a line (39) leads in the hydraulic block (19) to one of the connections (V2') for the auxiliary brake assembly (3).

3. Hydraulic block according to Claim 2, **characterized in that** the line (39) leads from the receptacle (30') for the check valve (30) laterally past the external-force cylinder bore (9'), away from the fastening side (36) after a bend below the cylinder bore (17') of the pedal travel simulator (17), laterally past the master brake cylinder bore (15') after a further bend below the cylinder bore (17') of the pedal travel simulator (17), onwards in the direction of the bottom side (35) of the hydraulic block (19), and, after another bend, back in the direction of the fastening side (36) of the hydraulic block (19) as far as the one connection (V2') for the auxiliary brake assembly (3), which is provided in the motor side (32) of the hydraulic block (19) close to the bottom side (35).

4. Hydraulic block according to one or more of Claims 1 to 3, **characterized in that** the master brake cylinder bore (15') has a helical groove (40) which is a constituent part of a line (39) in the hydraulic block (19) that connects one of the connections (20') for the brake fluid reservoir (20) in the top side (34) of the hydraulic block (19) to one of the connections (V2') for the auxiliary brake assembly (3) in the motor side (32) of the hydraulic block (19).

5. Hydraulic block according to one or more of the preceding claims, **characterized in that** a line (41) leads from one of the connections (20') for the brake fluid reservoir (20) to a rear side of a simulator piston into the cylinder bore (17') for a pedal travel simulator (17).

6. Hydraulic block according to one or more of the preceding claims, **characterized in that** a line (42) leads from the cylinder bore (17') of the pedal travel simulator (17) to a groove (43) in the master brake cylinder bore (15'), which groove surrounds a master brake cylinder piston.

7. Hydraulic block according to one or more of the preceding claims, **characterized in that** a venting line (45) communicates with the master brake cylinder bore (15') at a circumferential point which is directed towards the top side (34) of the hydraulic block (19).

8. Hydraulic block according to one or more of the preceding claims, **characterized in that** one of the connections (R1') for the auxiliary brake assembly (3) is provided in the motor side (32) of the hydraulic block (19) close to the top side (34), **in that** a line (51) leads from there in the direction of the fastening side (36) of the hydraulic block (19) and, after a bend close to the fastening side (36), in the direction of the bottom side (35) of the hydraulic block (19) to a receptacle (12') for an isolation valve (12), which is provided in a valve side (33), opposite the motor side (32), of the hydraulic block (19) approximately at the same height as the axis of the external-force cylinder bore (9').

9. Hydraulic block according to one or more of the preceding claims, **characterized in that** that a line (52) leads from the connection (R2') for the auxiliary brake assembly (3) close to the bottom side (35) in the motor side (32) of the hydraulic block (19) away from the fastening side (36) and, after a bend upwards, to a receptacle (12') for an isolation valve (12) in the valve side (33) of the hydraulic block (19).

## Revendications

1. Bloc hydraulique pour un groupe de freinage de service d'un système de freinage hydraulique à force externe pour un véhicule automobile à conduite autonome, le bloc hydraulique (19) présentant un côté supérieur (34) qui est prévu pour une mise en place d'un réservoir de liquide de frein (20) et qui présente des raccords (20') pour le réservoir de liquide de frein (20), un côté de fixation (36) adjacent au côté supérieur (34), qui est configuré pour une fixation du bloc hydraulique (19) sur un tablier du véhicule automobile et sur lequel débouche un alésage de maître-cylindre de frein (15'), un côté moteur (32) adjacent au côté supérieur (34) et au côté de fixation (36), sur lequel peut être agencé un moteur électrique (7) pour un entraînement d'un piston (6) d'un générateur de pression de freinage à force externe (10), et des raccords (4') pour un raccordement de freins de roue hydrauliques (4') et pour un raccordement d'un groupe de freinage auxiliaire (3) par des conduites de frein au groupe de freinage de service (2) dans le côté moteur (32), **caractérisé en ce qu'**un alésage de cylindre de force externe (9') est monté entre le côté supérieur (34) et l'alésage de maître-cylindre de frein (15') dans le côté moteur (32) du bloc hydraulique (19), et **en ce que** le bloc hydraulique (19) présente un raccord (V2', R1') pour le groupe de freinage auxiliaire (3) à partir d'un axe de l'alésage de cylindre de force externe (9') à un angle d'environ 45° par rapport au côté supérieur (34) du bloc hydraulique (19) sur un côté de l'alésage de cylindre de force externe (9') détourné du côté de fixation (36) du bloc hydraulique (19) et/ou un raccord (V1', R2') pour le groupe de freinage auxiliaire (3) près d'un côté inférieur (35) opposé au côté supérieur (34) dans le côté moteur (32) du bloc hydraulique (19).

2. Bloc hydraulique selon la revendication 1, **caractérisé en ce que** l'un des raccords (20') pour le réservoir de liquide de frein (20) présente, dans le côté supérieur (34) du bloc hydraulique (19), un logement concentrique (30') pour un clapet anti-retour (30), à partir duquel une conduite (39) mène, dans le bloc hydraulique (19), à l'un des raccords (V2') pour le groupe de freinage auxiliaire (3).

3. Bloc hydraulique selon la revendication 2, **caractérisé en ce que** la conduite (39) mène du logement (30') pour le clapet anti-retour (30), en passant latéralement devant l'alésage de cylindre de force externe (9'), après un coude sous l'alésage de cylindre (17') du simulateur de course de pédale (17), en s'éloignant du côté de fixation (36), après un autre coude sous l'alésage de cylindre (17') du simulateur de course de pédale (17), en passant latéralement devant l'alésage de maître-cylindre de frein (15'), à nouveau plus loin en direction du côté inférieur (35) du bloc hydraulique (19), et, après encore un coude, en revenant vers le côté de fixation (36) du bloc hydraulique (19) jusqu'à un raccord (V2') pour le groupe de freinage auxiliaire (3), qui est monté près du côté inférieur (35) dans le côté moteur (32) du bloc hydraulique (19).

4. Bloc hydraulique selon une ou plusieurs des revendications 1 à 3, **caractérisé en ce que** l'alésage de maître-cylindre de frein (15') présente une rainure hélicoïdale (40) faisant partie d'une conduite (39) dans le bloc hydraulique (19) reliant l'un des raccords (20') pour le réservoir de liquide de frein (20) dans le côté supérieur (34) du bloc hydraulique (19) à l'un des raccords (V2') pour le groupe de freinage auxiliaire (3) dans le côté moteur (32) du bloc hydraulique (19).

5. Bloc hydraulique selon une ou plusieurs des revendications précédentes, **caractérisé en ce qu'**une conduite (41) mène de l'un des raccords (20') pour le réservoir de liquide de frein (20) à un côté arrière d'un piston de simulateur dans l'alésage de cylindre (17') pour un simulateur de course de pédale (17).

6. Bloc hydraulique selon une ou plusieurs des revendications précédentes, **caractérisé en ce qu'**une conduite (42) mène de l'alésage de cylindre (17') du simulateur de course de pédale (17) à une rainure (43) entourant un piston de maître-cylindre de frein dans l'alésage de maître-cylindre de frein (15').

7. Bloc hydraulique selon une ou plusieurs des revendications précédentes, **caractérisé en ce qu'**une conduite de purge (45) communique avec l'alésage de maître-cylindre de frein (15') en un point périphérique faisant face au côté supérieur (34) du bloc hydraulique (19).

8. Bloc hydraulique selon une ou plusieurs des revendications précédentes, **caractérisé en ce que** l'un des raccords (R1') pour l'unité de freinage auxiliaire (3) est monté près du côté supérieur (34) dans le côté moteur (32) du bloc hydraulique (19), **en ce qu'**une conduite (51) mène de là en direction du côté de fixation (36) du bloc hydraulique (19) et, après un coude près du côté de fixation (36), en direction du côté inférieur (35) du bloc hydraulique (19), vers un logement (12') pour une soupape de séparation (12) qui est montée à peu près à la même hauteur que l'axe de l'alésage de cylindre de force externe (9') dans un côté de soupape (33) du bloc hydraulique (19) opposé au côté moteur (32).

9. Bloc hydraulique selon une ou plusieurs des revendications précédentes, **caractérisé en ce qu'**une conduite (52) mène du raccord (R2') pour l'unité de freinage auxiliaire (3) près du côté inférieur (35) dans le côté moteur (32) du bloc hydraulique (19) en s'éloignant du côté de fixation (36) et, après un coude vers le haut, vers un logement (12') pour une soupape de séparation (12) dans le côté soupape (33) du bloc hydraulique (19).
